# EUROPEAN PATENT APPLICATION

(11) **EP 4 379 033 A1**
(43) Date of publication of application: **05.06.2024**
(21) Application number: 22849257.5
(22) Date of filing: 13.07.2022
(51) Int. Cl.: C12G 3/06, C12G 3/04

(54) **CARBONATED ALCOHOLIC BEVERAGE**

(30) Priority: 30.07.2021 JP 2021124989
(71) Applicant: Suntory Holdings Limited, Osaka 530-8203 (JP)
(72) Inventor: OKURA, Ryuki, Kawasaki-shi, Kanagawa 211-0067 (JP); NAKAJIMA, Mihoko, Kawasaki-shi, Kanagawa 211-0067 (JP)
(74) Representative: Vossius & Partner Patentanwälte Rechtsanwälte mbB
(86) International application number: PCT/JP2022/027524
(87) International publication number: WO 2023/008193

(57) **Abstract**

An object of the present invention is to provide a carbonated alcoholic beverage in which a mature taste and fullness in taste are enhanced and to which a refreshing taste is also imparted. (A) The content of syringaldehyde is adjusted to 0.7 to 2,400 ppb and (B) the content of cis-3-hexen-1-ol is adjusted to 0.7 to 340 ppb in the alcoholic beverage.

## Description

### TECHNICAL FIELD

The present invention relates to a carbonated alcoholic beverage and the like. More specifically, a carbonated alcoholic beverage in which a mature taste and fullness in taste are enhanced and to which a refreshing taste is also imparted, and a method for producing the same and the like.

### BACKGROUND ART

In recent years, the amount of consumption of alcoholic drinks is declining particularly in the younger generation. The diversification of consumer tastes for alcoholic drinks and a large change in drinking styles are pointed out as the reasons. To correspond to such a change, alcoholic drinks manufacturers are intensively developing various new alcoholic beverage products. In developing such new products, various problems that are conventionally not recognized have appeared.

For example, a whisky boom has occurred in recent years, and there is a need for an alcoholic beverage having a mature taste and fullness in taste based on the consumer demand of requiring a real taste as if it is stored and aged in a barrel (Patent Literature 1). On the other hand, there are consumers requiring a refreshing flavor (refreshing taste) of carbonated alcoholic beverages (Patent Literature 2), and therefore, the development of a carbonated alcoholic beverage achieving both the "enhancement of a mature taste and fullness in taste" and the "impartment of a refreshing taste" is required.

### CITATION LIST

### PATENT LITERATURE

PTL 1: International Publication No. WO 2017/073704
PTL 2: International Publication No. WO 2019/239793

### SUMMARY OF INVENTION

### TECHNICAL PROBLEM

As described above, the development of a carbonated alcoholic beverage achieving both the "enhancement of a mature taste and fullness in taste" and the "impartment of a refreshing taste" is required. However, it has been difficult to develop the carbonated alcoholic beverage achieving both the "enhancement of a mature taste and fullness in taste" and the "impartment of a refreshing taste". In view of such a situation, an object of the present invention is to provide a carbonated alcoholic beverage in which a mature taste and fullness in taste are enhanced and which has a refreshing taste.

### SOLUTION TO PROBLEM

The present inventors have intensively studied, and as a result, found that the mature taste and fullness in taste of the carbonated alcoholic beverage are enhanced by allowing syringaldehyde and alcohol to coexist. Further, the present inventors have demonstrated that a refreshing taste can also be imparted to the carbonated alcoholic beverage by blending cis-3-hexen-1-ol. As a result, the present inventors have found that a carbonated alcoholic beverage in which a mature taste and fullness in taste are enhanced and which has a refreshing taste can be provided by adjusting (A) the content of syringaldehyde to 0.7 to 2,400 ppb and adjusting (B) the content of cis-3-hexen-1-ol to 0.7 to 340 ppb in the carbonated alcoholic beverage, thereby completing the present invention.

That is, the present invention encompasses, but is not limited to, the inventions of the following aspects.
[1] A carbonated alcoholic beverage filled in a container satisfying the following (A) and (B):
   (A) a content of syringaldehyde: 0.7 to 2,400 ppb, and
   (B) a content of cis-3-hexen-1-ol: 0.7 to 340 ppb.
[2] The carbonated alcoholic beverage according to [1], wherein an alcohol content is 1 to 45 v/v%.
[3] The carbonated alcoholic beverage according to [1] or [2], containing a component derived from green tea.
[4] The carbonated alcoholic beverage according to any one of [1] to [3], containing one or two or more selected from the group consisting of whisky, brandy, Shochu, rum, vodka, and gin.
[5] A method of producing a carbonated alcoholic beverage filled in a container, the method comprising the following steps (i) to (iv):
   (i) a step of adjusting a content of syringaldehyde to 0.7 to 2,400 ppb;
   (ii) a step of adjusting a content of cis-3-hexen-1-ol to 0.7 to 340 ppb;
   (iii) a step of incorporating carbon dioxide; and
   (iv) a step of filling a container with the carbonated alcoholic beverage.
[6] A method of enhancing a mature taste and fullness in taste of the carbonated alcoholic beverage and imparting a refreshing taste, the method including the following steps (i) to (iv):
   (i) a step of adjusting a content of syringaldehyde to 0.7 to 2,400 ppb;
   (ii) a step of adjusting a content of cis-3-hexen-1-ol to 0.7 to 340 ppb;
   (iii) a step of incorporating carbon dioxide; and
   (iv) a step of filling a container with the carbonated alcoholic beverage.

### ADVANTAGEOUS EFFECTS OF INVENTION

According to the present invention, a carbonated alcoholic beverage in which a mature taste and fullness in taste are enhanced and which has a refreshing taste can be provided. That is, according to the present invention, a carbonated alcoholic beverage achieving both the "enhancement of a mature taste and fullness in taste" and the "impartment of a refreshing taste" and having a new value can be provided. Such a carbonated alcoholic beverage has an excellent quality satisfying consumer tastes.

### DESCRIPTION OF EMBODIMENTS

### 1. Carbonated alcoholic beverage filled in container

In one aspect, the present invention is a carbonated alcoholic beverage filled in a container in which (A) the content of syringaldehyde is 0.7 to 2,400 ppb and (B) the content of cis-3-hexen-1-ol is 0.7 to 340 ppb.

The present invention relates to an alcoholic beverage. In an aspect, the alcoholic beverage of the present invention relates to a tea-based alcoholic beverage having a tea flavor in which an extraction liquid of green tea, oolong tea, or the like is blended. The alcohol used in the alcoholic beverage of the present invention is not particularly limited, and those usually used in alcoholic drinks, such as distilled spirits, fruit liquors, and sake (Japanese sake), can be used. For example, distilled alcohol, whisky, brandy, shochu, and spirits (such as rum, vodka, and gin) may be each used singly or in combination. Among them, a continuous distilled alcohol obtained by distilling an alcohol-containing product with a continuous still is preferably used. Examples of such a continuous distilled alcohol can include brewing alcohol, material alcohol, continuous distilled shochu (so-called Korui shochu), and grain whisky.

In the present invention, the term alcohol refers to ethyl alcohol (ethanol), unless otherwise indicated. The alcohol content refers to the volume% (v/v%) in a beverage. In the carbonated alcoholic beverage of the present invention, the upper limit value of the alcohol content is not particularly limited as long as (A) the content of syringaldehyde and (B) the content of cis-3-hexen-1-ol in the beverage are within predetermined ranges, and they are typically 1 to less than 45 v/v%. In an aspect, the upper limit value of the alcohol content in the alcoholic beverage of the present invention is 40 v/v% or less, 30 v/v% or less, 20 v/v% or less, 15 v/v% or less, 10 v/v% or less, or 5 v/v% or less, and the lower limit value is 1.5 v/v% or more, 2 v/v% or more, 2.5 v/v% or more, or 3 v/v% or more.

To adjust the alcohol content, a known method such as adjusting the amount of alcohol (such as ethanol) to be added can be appropriately used.

In the present specification, the alcohol content of the alcoholic beverage can be measured by any of known methods and can be measured by, for example, a vibration type densitometer. Specifically, the alcohol content of the alcoholic beverage can be determined by removing carbon dioxide from the alcoholic beverage by filtration or ultrasonication to prepare a sample, distilling the prepared sample by direct fire, and measuring and converting the density of the obtained distillate at 15°C using "Table 2 Conversion among Alcohol Content, Density (15°C) and specific gravity (15/15°C)" which is appended to the Official Analysis Method of the National Tax Agency (National Tax Agency Directive No. 6 in 2007, revised on June 22, 2007).

The carbonated alcoholic beverage of the present invention contains syringaldehyde. Syringaldehyde is a component derived from lignin and has a sweet aged aroma like vanilla. In the carbonated alcoholic beverage of the present invention, the lower limit value of the content of syringaldehyde in the beverage is 0.7 ppb, 1 ppb, 2 ppb, 5 ppb or 10 ppb and the upper limit value of the content of syringaldehyde in the beverage is 2,400 ppb, 2,000 ppb, 1,500 ppb, 1,000 ppb, 500 ppb, 250 ppb, 100 ppb, or 50 ppb. Typically, in the carbonated alcoholic beverage of the present invention, the content range of syringaldehyde in the beverage is 0.7 to 2,400 ppb, 1 to 2,000 ppb, 1 to 1,500 ppb, 1 to 1,000 ppb, 1 to 500 ppb, 1 to 250 ppb, 1 to 100 ppb or 1 to 50 ppb.

In the present invention, the method of measuring the content of syringaldehyde is not particularly limited, and a known method can be appropriately selected and used. For example, measurement is preferably performed by using LC-MS or HPLC, and measurement is particularly preferably performed by using HPLC.

The carbonated alcoholic beverage of the present invention contains cis-3-hexen-1-ol which is one of the unsaturated alcohols and also referred to as leaf alcohol, cis-3-Hexen-1-ol is a colorless liquid at ambient temperature which is discovered as an aroma component of green tea and named. In the carbonated alcoholic beverage of the present invention, the lower limit value of the content of cis-3-hexen-1-ol in the beverage is 0.7 ppb, 1 ppb, 5 ppb, 10 ppb, 50 ppb, or 100 ppb, and the upper limit value of the content of cis-3-hexen-1-ol in the beverage is 340 ppb, 300 ppb, 250 ppb, 200 ppb, 150 ppb or 100 ppb. Typically, in the carbonated alcoholic beverage of the present invention, the content range of cis-3-hexen-1-ol in the beverage is 0.7 to 340 ppb, 1 to 300 ppb, 1 to 250 ppb, 1 to 200 ppb, 1 to 150 ppb, or 1 to 100 ppb. When the content of cis-3-hexenol in the beverage is less than 0.7 ppb, the refreshing taste is not imparted to the beverage, and when the content of cis-3-hexen-1-ol is more than 340 ppb, a grassy smell inherent in cis-3-hexen-1-ol is strongly sensed.

In the present invention, the method of measuring the content of cis-3-hexen-1-ol is not particularly limited, and a known method can be appropriately selected and used. For example, measurement is preferably performed by using GC-MS.

In an aspect, the alcoholic beverage in the present invention is a tea-based alcoholic beverage as described above, and typically refers to an alcoholic beverage containing an extract obtained by processing and extracting a plant of the family Theaceae by a conventionally known method. In one aspect, cis-3-hexen-1-ol contained in the carbonated alcoholic beverage of the present invention is derived from a plant of the family Theaceae.

In one aspect, the carbonated alcoholic beverage of the present invention may be one containing an extract obtained by processing and extracting leaves of tea plant (Camellia sinensis) that is an evergreen tree belonging to the genus Camellia of the family Theaceae (also referred to as "tea leaves" in the present specification) by a conventionally known method. In one aspect, cis-3-hexen-1-ol contained in the carbonated alcoholic beverage of the present invention is derived from tea plant.

As for the tea, the type of the tea obtained is classified by the method of processing tea leaves, and particularly by the difference in the degree of fermentation, and the quality of the tea extraction liquid is also different from each other. For example, green tea is a non-fermented tea in which the enzyme activity is lost by subjecting picked tea leaves to heat treatment, thereby preventing the oxidation of components and maintaining green color. Oolong tea is obtained by lightly stimulating picked tea leaves while withering the tea leaves to oxidize a part of tea leaf components, and then "roasting (kamairi)" the tea leaves. Oolong tea has intermediate properties between green tea and black tea and is referred to as the semi-fermented tea. Black tea is a fully fermented tea obtained by withering the picked tea leaves and twisting them well, thereby progressing the oxidation of tea leaf components by the oxidase in the tea leaves. In addition to these, there is a post-fermented tea obtained by accumulating tea leaves for a long period of time to cause the tea leaves to receive a microbial action and cause a sufficient component change. Thus, in one aspect, cis-3-hexen-1-ol contained in the carbonated alcoholic beverage of the present invention is derived from green tea, oolong tea, black tea, or post-fermented tea.

In an aspect, the carbonated alcoholic beverage of the present invention contains a component derived from green tea.

As described above, in one aspect, the carbonated alcoholic beverage of the present invention is a beverage having a refreshing flavor of tea. The method of imparting the refreshing flavor of tea is not particularly limited, and for example, the refreshing flavor of tea can be imparted by blending a tea extract, or adding a component contributing to tea flavor. When a tea extract is used, the type and method of processing the tea leaves serving as the raw material are not particularly limited, and for example, an aqueous extraction liquid containing a water-soluble solid content that is obtained by extracting tea with water (hot water) can be used. In an adding aspect, the tea extraction liquid may be added to the alcoholic beverage as it is, or one obtained by concentrating, drying, and pulverizing the tea extraction liquid may be added.

The carbonated alcoholic beverage of the present invention is a carbonated alcoholic beverage containing carbon dioxide. In the present invention, the carbon dioxide pressure is not particularly limited, and for example, the lower limit value of the carbon dioxide pressure is 1.0 kgf/cm² or more, 1.2 kgf/cm² or more, or 1.3 kgf/cm² or more, and the upper limit value of the carbon dioxide pressure is 3.0 kgf/cm² or less, 2.7 kgf/cm² or less, or 2.5 kgf/cm² or less at 20°C. Typically, the carbon dioxide pressure in the carbonated alcoholic beverage of the present invention is 1.0 to 3.0 kgf/cm², preferably 1.2 to 2.7 kgf/cm², and more preferably 1.3 to 2.5 kgf/cm² at 20°C.

The carbon dioxide pressure in the beverage can be prepared using a method usually known to those skilled in the art without particular limitation. For example, carbon dioxide may be dissolved in the beverage under increased pressure, or carbon dioxide and the beverage may be mixed in piping using a mixer such as a carbonator of Tuchenhagen. Alternatively, carbon dioxide may be absorbed into the beverage by spraying the beverage into a tank filled with carbon dioxide, or the beverage may be mixed with carbonated water or the like.

The measurement of the carbon dioxide pressure in the beverage can be performed by a method known to those skilled in the art. For example, it can be measured by using a gas volume measurement device GVA-500A manufactured by Kyoto Electronics Manufacturing Co., Ltd. More specifically, the sample temperature is set to 20°C, the air in a container is degassed (snifted) in the gas volume measurement device, the container is shaken, and then the carbon dioxide pressure is measured. In the present specification, the carbon dioxide pressure is measured by the above method, unless otherwise stated.

The carbonated alcoholic beverage of the present invention is a carbonated alcoholic beverage filled in a container. The beverage filled in a container is preferred because it enables stable storage over a long period of time. The container of the beverage filled in a container is not particularly limited, and any of usually used containers such as metal containers, resin containers, paper containers, and glass containers can be used. Specifically, examples thereof can include metal containers such as aluminum cans and steel cans, resin containers such as PET bottles, paper containers such as cartons, and glass containers such as glass bottles.

In the alcoholic beverage of the present invention, an additive such as a saccharide, an acid, a fragrance, a vitamin, a pigment, an antioxidant, an acidulant, an emulsifying agent, a preservative, a seasoning, an extract, a pH regulator, or a quality stabilizer may be blended, as long as the effect of the present invention is not impaired.

### 2. Method of producing carbonated alcoholic beverage filled in container, and method of enhancing mature taste and fullness in taste of carbonated alcoholic beverage and imparting refreshing taste

In one aspect, the present invention is a method of producing an alcoholic beverage, including: (i) a step of adjusting a content of syringaldehyde to 0.7 to 2,400 ppb; (ii) a step of adjusting a content of cis-3-hexen-1-ol to 0.7 to 340 ppb; (iii) a step of incorporating carbon dioxide; and (iv) a step of filling a container with the carbonated alcoholic beverage. In an aspect, the present invention is a method of enhancing the mature taste and fullness in taste of the carbonated alcoholic beverage and imparting a refreshing taste, including (i) a step of adjusting a content of syringaldehyde to 0.7 to 2,400 ppb; (ii) a step of adjusting a content of cis-3-hexen-1-ol to 0.7 to 340 ppb; (iii) a step of incorporating carbon dioxide; and (iv) a step of filling a container with the carbonated alcoholic beverage. The range of the content of syringaldehyde and cis-3-hexen-1-ol, the range of the alcohol content, the method of incorporating carbon dioxide, the aspect of the container, and the like are as described in the above-described item of " 1. Carbonated alcoholic beverage filled in a container".

### EXAMPLES

The present invention will be described in more detail with reference to the following Examples, but the present invention is not limited to the specific aspects described in the following examples. In the present specification, unless stated otherwise, the numerical value range includes the endpoints.

### Test Example 1: Effects of enhancing mature taste and fullness in taste due to coexistence of syringaldehyde and alcohol

### 1. Method of preparing sample beverage

Pure water was added to a commercially available material alcohol, and the alcohol content was adjusted as described in the following Table 1. Thereafter, commercially available syringaldehyde (manufactured by Tokyo Kasei Kogyo Co., Ltd.) was added so as to be the concentration described in the following Table 1, whereby sample beverages 1 to 24 were prepared.

### 2. Sensory evaluation

For the prepared sample beverages 1 to 24, a sensory evaluation test was performed by 6 evaluators from the viewpoint of the "mature taste and fullness in taste" based on the following criteria. Before the sensory evaluation test was performed, solutions obtained by dissolving syringaldehyde in a concentration of 0.5 to 2,500 ppb in each of the mixtures of pure water and the material alcohol in which the alcohol content was adjusted to 0 or 45 v/v%, were prepared. It was confirmed among 6 trained panelists that the solution in which the alcohol content is 0 v/v% and syringaldehyde was dissolved in a concentration of 0.5 ppb was evaluated as Score 1 and the solution in which the alcohol content was 45 v/v% and syringaldehyde was dissolved in a concentration of 2,500 ppb was evaluated as Score 6. The scoring of the mature taste and fullness in taste was performed based on the above.

### <Evaluation score criteria>

Score 6: The mature taste and fullness in taste are strongly sensed
Score 5: The mature taste and fullness in taste are sensed
Score 4: The mature taste and fullness in taste are slightly sensed
Score 3: The mature taste and fullness in taste are a little weak
Score 2: The mature taste and fullness in taste are weak
Score 1: Almost no mature taste and fullness in taste are sensed

After performing the sensory evaluation test, an average score was calculated from the evaluation scores of 6 panelists, and the "degree of mature taste and fullness in taste" was evaluated on the following five-grade scale according to the average score. The results are shown in Table 1.

### <Degree of mature taste and fullness in taste>

Average score 5 or more: +++
Average score 4 or more and less than 5: ++
Average score 3 or more and less than 4: +
Average score 2 or more and less than 3: ±
Average score 1 or more and less than 2: -

**[Table 1]**

| Sample number | Alcohol content | Syringaldehyde content | Degree of mature taste and fullness in taste |
|---|---|---|---|
| | (v/v%) | (ppb) | |
| 1 | 0 | 0.5 | |
| 2 | | 1 | - |
| 3 | | 50 | - |
| 4 | | 500 | - |
| 5 | | 2000 | ± |
| 6 | | 2500 | ± |
| 7 | 3 | 0.5 | - |
| 8 | | 1 | + |
| 9 | | 50 | + |
| 10 | | 500 | + + |
| 11 | | 2000 | + + + |
| 12 | | 2500 | + + + |
| 13 | 7 | 0.5 | - |
| 14 | | 1 | + |
| 15 | | 50 | + + |
| 16 | | 500 | + + + |
| 17 | | 2000 | + + + |
| 18 | | 2500 | + + + |
| 19 | 45 | 0.5 | - |
| 20 | | 1 | + + |
| 21 | | 50 | + + + |
| 22 | | 500 | + + + |
| 23 | | 2000 | + + + |
| 24 | | 2500 | + + + |

The results of Table 1 demonstrated that the mature taste and fullness in taste can be sensed when syringaldehyde coexists in a beverage containing alcohol. In addition, there was recognized a tendency that the mature taste and fullness in taste are stronger when the alcohol content is increased or the content of syringaldehyde is increased. Syringaldehyde is often contained in alcoholic beverages stored in a barrel. The results of Table 1 suggested that one of the factors of the mature taste and fullness in taste of the alcoholic beverages stored in a barrel is the coexistence of syringaldehyde and alcohol.

### Test Example 2: Effect of imparting refreshing taste due to cis-3-hexen-1-ol

### 1. Method of preparing sample beverage

Pure water and commercially available carbonated water were added to a material alcohol (commercially available), and the alcohol content was adjusted as described in the following Table 2. Thereafter, commercially available syringaldehyde (manufactured by Tokyo Kasei Kogyo Co., Ltd.) and cis-3-hexen-1-ol (manufactured by Tokyo Kasei Kogyo Co., Ltd.) were added so as to be the concentration described in the following Table 2, whereby sample beverages 25 to 66 were prepared. The carbon dioxide pressure of each sample beverage was adjusted to be 2.0 kgf/cm².

### 2. Sensory evaluation

For the prepared sample beverages 25 to 66, a sensory evaluation test was performed by 6 evaluators from the viewpoint of the "refreshing taste" based on the following criteria. Before the sensory evaluation test was performed, it was confirmed among 6 evaluators that, as for the evaluation item of the "refreshing taste", a beverage similar to the beverage to which cis-3-hexen-1-ol was not added in each sample (see Test Example 1) was evaluated as Score 1, the beverages were evaluated according to the degree of impartment of the "refreshing taste" on six-grade scale from Score 1 to Score 6, and Score 3 was the passing mark as a product. As for the evaluation item of the "deliciousness as beverage", it was confirmed among 6 evaluators in advance that the beverages were comprehensively evaluated from both aspects of the "mature taste and fullness in taste" and the "refreshing taste" and scored from Score 6 to Score 1 in order from one being good in these aspects, and Score 3 was the passing mark as a product, and thus scoring was performed.

### <Evaluation score criteria of refreshing taste>

Score 6: The refreshing taste is strongly sensed
Score 5: The refreshing taste is slightly strongly sensed
Score 4: The refreshing taste is sensed
Score 3: The refreshing taste is slightly sensed
Score 2: The refreshing taste is faintly sensed
Score 1: No refreshing taste is sensed

### <Evaluation score criteria of deliciousness as beverage>

Score 6: easy to drink as a beverage, very delicious
Score 5: significantly preferred as a beverage
Score 4: preferred as a beverage
Score 3: slightly preferred as a beverage
Score 2: slightly not preferred as a beverage
Score 1: not preferred as a beverage

After performing the sensory evaluation test, an average score was calculated from the evaluation scores of 6 panelists, and the "refreshing taste" and the "deliciousness as beverage" were evaluated on the following five-grade scale according to the average score. The results are shown in Table 2-1 to Table 2-2.

### Average score 5 or more: +++

Average score 4 or more and less than 5: ++
Average score 3 or more and less than 4: +
Average score 2 or more and less than 3: ±
Average score 1 or more and less than 2: -

**[Table 2-1]**

| Sample number | Alcohol content | Syringaldeh yde content | cis-3-Hexen-1 - ol content | Refreshing taste | Deliciousn ess as beverage | Comment |
|---|---|---|---|---|---|---|
| | (v/v%) | (ppb) | (ppb) | | | |
| 25 | 3 | | 0 | - | - | There is no effect of imparting a refreshing taste. |
| 26 | | | 1 | + | + | The sample gives a little fresh impression as compared with Sample 25. |
| 27 | | | 50 | + + | + + | The effect of imparting a refreshing taste is sensed. |
| 28 | | | 100 | + + + | + + + | The effect of imparting a refreshing taste is highly sensed. |
| 29 | | | 200 | + + + | + + | The sample is refreshing and easy to drink. The element of cis-3-hexen-1-ol is slightly sensed. |
| 30 | | | 300 | + + + | + | The sample is refreshing and easy to drink, but the characteristics of cis-3-hexen-1-ol are also sensed. |
| 31 | | 1 | 350 | + + + | ± | The characteristics of cis-3-hexen-1-ol are stronger than that of Sample 30. |
| 32 | | | 0.5 | ± | - | The effect of imparting a refreshing taste is hardly sensed. |
| 33 | | | 1 | + | + + | The sample is slightly refreshing as compared with Sample 32. |
| 34 | | | 50 | + + | + + | The effect of imparting a refreshing taste is sensed. The sample has fullness in taste and a good balance. |
| 35 | | | 100 | + + + | + + + | The effect of imparting a refreshing taste is high. The thickness in taste is also sensed, and the sample is delicious. |
| 36 | | | 200 | + + + | + + | The effect of imparting a refreshing taste is high. |
| 37 | | | 300 | + + + | + | The effect of imparting a refreshing taste is sensed, but the element of cis-3-hexen-1-ol is slightly sensed. |
| 38 | | | 350 | + + + | ± | The smell of cis-3-hexen-1-ol is more easily sensed than Sample 37. |
| 39 | 7 | 500 | 0.5 | + | - | The effect of imparting a refreshing taste is hardly sensed. |
| 40 | | | 1 | + | + + | A refreshing taste is more imparted than in Sample 39. |
| 41 | | | 50 | + | + + | The effect of imparting a refreshing taste is more sensed than in Sample 40, but the effect is considered to be low as compared with Sample 34. |
| 42 | | | 100 | + + | + + | The effect of imparting a refreshing taste is sensed. The sample has fullness in taste of maturing and is delicious. |
| 43 | | | 200 | + + + | + + | The effect of imparting a refreshing taste is higher than in Sample 42. |
| 44 | | | 300 | + + + | + | I he effect ot imparting a refreshing taste is high, and a tresh impression is given. The sample has a little grassy smell. |
| 45 | | | 350 | + + + | ± | The sample is fresh, but a grassy smell is disturbing. |

**[Table 2-2]**

| Sample number | Alcohol content | Syringaldehy de content | cis-3-Hexen-1-ol content | Refreshing taste | Deliciousn ess as beverage | Comment |
|---|---|---|---|---|---|---|
| | (v/v%) | (ppb) | (ppb) | | | |
| 46 | 7 | | 0.5 | - | - | The effect of imparting a refreshing taste is hardly sensed. |
| 47 | | | 1 | + | + | i he effect of imparting a refreshing taste is more sensed than in sample 4b, but the effect is weaker than in Sample 40. |
| 48 | | | 50 | + | 1 | The effect of imparting a refreshing taste is sensed, but the balance of the mature taste is stronger than the effect. |
| 49 | | | 100 | + + | + + | The effect of imparting a refreshing taste is more sensed than in Sample 48, and the balance is good. |
| 50 | | | 200 | + + | + + | The effect of imparting a refreshing taste is sensed. The sample has a thickness and a good balance. |
| 51 | | | 300 | + + + | + | The effect of imparting a refreshing taste is higher than that in 50. |
| 52 | | | 350 | + + + | ± | The sample is fresh but grassy. |
| 53 | | 2000 | 0.5 | - | - | The effect of imparting a refreshing taste is hardly sensed. |
| 54 | | | 1 | + | + | The mature taste and thickness are slightly higher, but within an acceptable range. |
| 55 | | | 50 | + | + | Although the sample has a well-structured mature taste, the effect of imparting a refreshing taste is sensed as compared with Sample 54. |
| 56 | | | 100 | + | + + | The sample has the effect of imparting a refreshing taste. The whole balance is good. |
| 57 | | | 200 | + + | + | The sample has the effect of imparting a refreshing taste. |
| 58 | | | 300 | + + | + | The effect of imparting a refreshing taste is high, but a grassy smell is slightly sensed . |
| 59 | 45 | | 350 | + + + | ± | The smell of cis-3-hexen-1-ol is outstanding. |
| 60 | | 2500 | 0.5 | - | - | The effect of imparting a refreshing taste is hardly sensed. |
| 61 | | | 1 | ± | ± | The mature taste and fullness in taste are strong. The refreshing impression is weak. |
| 62 | | | 50 | ± | ± | The mature taste is well-structured. The effect of imparting a refreshing taste is hardly sensed. |
| 63 | | | 100 | + | ± | The effect of imparting a refreshing taste is sensed more than 62. |
| 64 | | | 200 | + | ± | The effect of imparting a refreshing taste is found in the thickness. |
| 65 | | | 300 | + + | ± | The effect of imparting a refreshing taste is sensed, but the whole balance is disrupted. |
| 66 | | | 350 | + + | ± | The effect of imparting a refreshing taste is sensed, but the sample is grassy. |

It was found from the results of Table 2-1 to Table 2-2 that, by containing 0.7 to 340 ppb of cis-3-hexen-1-ol in a beverage containing alcohol and syringaldehyde, a refreshing taste is imparted and deliciousness as a beverage reaches the passing score, while achieving the mature taste and fullness in taste due to the coexistence of alcohol and syringaldehyde. When 350 ppb of cis-3-hexen-1-ol was added under the above conditions, the grassy smell of cis-3-hexen-1-ol itself was easily sensed, while the refreshing taste was sensed in any cases, so that there was a tendency that the evaluation score of deliciousness as a beverage was low. In addition, in the beverage containing 2,500 ppb of syringaldehyde, the refreshing taste was imparted due to the addition of cis-3-hexen-1-ol, while there was a tendency that the evaluation score of the "deliciousness as beverage" was low.

## Claims

1. A carbonated alcoholic beverage filled in a container satisfying the following (A) and (B):
(A) a content of syringaldehyde: 0.7 to 2,400 ppb, and
(B) a content of cis-3-hexen-1-ol: 0.7 to 340 ppb.

2. The carbonated alcoholic beverage according to claim 1, wherein an alcohol content is 1 to 45 v/v%.

3. The carbonated alcoholic beverage according to claim 1 or 2, comprising a component derived from green tea.

4. The carbonated alcoholic beverage according to any one of claims 1 to 3, comprising one or two or more selected from the group consisting of whisky, brandy, Shochu, rum, vodka, and gin.

5. A method of producing a carbonated alcoholic beverage filled in a container, the method comprising the following steps (i) to (iv):
(i) a step of adjusting a content of syringaldehyde to 0.7 to 2,400 ppb;
(ii) a step of adjusting a content of cis-3-hexen-1-ol to 0.7 to 340 ppb;
(iii) a step of incorporating carbon dioxide; and
(iv) a step of filling a container with the carbonated alcoholic beverage.

6. A method of enhancing a mature taste and fullness in taste of the carbonated alcoholic beverage and imparting a refreshing taste, the method comprising the following steps (i) to (iv):
(i) a step of adjusting a content of syringaldehyde to 0.7 to 2,400 ppb;
(ii) a step of adjusting a content of cis-3-hexen-1-ol to 0.7 to 340 ppb;
(iii) a step of incorporating carbon dioxide; and
(iv) a step of filling a container with the carbonated alcoholic beverage.
